# FASCICULE DE BREVET EUROPEEN

(11) **EP 2 516 093 B1**
(45) Date de publication et mention de la délivrance du brevet: **29.03.2017**
(21) Numéro de dépôt: 10788335.7
(22) Date de dépôt: 09.12.2010
(51) Int. Cl.: B23K 1/00, B23K 1/20, B01D 53/04, B60H 1/32, F25B 39/04, F25B 43/00

(54) **PROCÉDÉ DE BRASAGE D'UN COMPOSANT DE CIRCUIT DE CLIMATISATION COMPORTANT UNE BOUTEILLE RÉSERVOIR DE FLUIDE RÉFRIGERANT ET UNE TELLE BOUTEILLE**
LÖTVERFAHREN FÜR EINE KOMPONENTE EINES KLIMAANLAGENKREISLAUFES MIT EINER KÄLTEMITTELAUFNAHME UND DERARTIGE AUFNAHME
BRAZING METHOD FOR A COMPONENT OF AN AIR CONDITIONING CIRCUIT COMPRISING A FLUID REFRIGERANT RECEIVER, AND SUCH A RECEIVER

(30) Priorité: 22.12.2009 FR 0906246
(43) Date de publication de la demande: 31.10.2012
(73) Titulaire: Valeo Systèmes Thermiques, 78320 Le Mesnil-Saint-Denis (FR)
(72) Inventeur: MOREAU, Laurent, F-51100 Reims (FR); TAUPIN, Lionel, F-51220 Cormicy (FR); ZANCHETTA, Patrick, F-51450 Betheny (FR)
(74) Mandataire: Tran, Chi-Hai
(86) Numéro de dépôt international: PCT/EP2010/069312
(87) Numéro de publication internationale: WO 2011/076584

(56) Documents cités:
- FR-A1- 2 849 176
- US-A- 2 845 138
- US-A- 4 675 971
- US-A- 5 177 865
- US-A1- 2008 272 592

## Description

La présente invention concerne un procédé de brasage d'un composant de circuit de climatisation conformément au préambule de la revendication 1 et une bouteille réservoir de fluide réfrigérant conformément au préambule de la revendication 6 (voir, par exemple FR2 849 176 A1), destinée, notamment, à la mise en oeuvre d'un tel procédé.

L'invention trouve une application particulièrement avantageuse dans le domaine de la climatisation des véhicules automobiles.

D'une manière générale, les circuits de climatisation doivent répondre à un certain nombre de critères stricts concernant la propreté et l'ambiance à l'intérieur des canalisations dans lesquelles circule le fluide réfrigérant, tel que, par exemple, le fluide connu sous l'appellation R134A.

En effet, il faut impérativement éviter la présence dans les canalisations de corps étrangers trop nombreux ou d'une taille trop importante, car ils peuvent générer des problèmes pouvant mener jusqu'à la casse de certains composants des circuits de climatisation, comme le compresseur par exemple.

D'autre part, le fluide réfrigérant doit pouvoir circuler dans une ambiance exempte d'humidité, car les molécules d'eau ont tendance à produire des composés acides en présence de R134A et d'huile. Ces composés attaquent alors les joints présents le long des circuits, ce qui peut occasionner des fuites et la perte de fonctionnalités.

Par ailleurs, il est connu d'équiper certains composants de circuits de climatisation, notamment le condenseur, de bouteilles contenant au moins partiellement une certaine quantité de fluide réfrigérant en phase liquide. Ces bouteilles servent, d'une part, de réservoirs de fluide destinés à compenser d'éventuelles fuites dans les circuits, et, d'autre part, à garantir qu'en sortie des bouteilles le fluide réfrigérant est totalement en phase liquide avant d'être acheminé, par exemple, vers le détendeur du circuit. Dans des réalisations particulières, la sortie de la bouteille est ramenée dans une section du condenseur de manière à faire subir au fluide réfrigérant liquide un passage supplémentaire dit de sous-refroidissement.

Aussi, il a été proposé de tirer profit de la présence de bouteilles réservoirs sur le trajet suivi par le fluide réfrigérant pour résoudre les problèmes de propreté et d'ambiance évoqués plus haut. A cet effet, un filtre et un dessiccateur sont disposés à l'intérieur des bouteilles afin d'éliminer au maximum la présence de corps étrangers et d'humidité dans les boucles de circulation du fluide réfrigérant.

Il existe deux grandes familles de bouteilles, à savoir les bouteilles dites rapportées et les bouteilles dites intégrées.

Les bouteilles rapportées sont fournies déjà équipées d'un filtre et d'un dessiccateur. Elles sont assemblées en finition du composant considéré, généralement le condenseur, au moyen de vis et de joints toriques. Cependant, si ce type de bouteilles présente l'avantage d'être démontable, il n'en exige pas moins une opération spécifique d'assemblage coûteuse.

Le document US4 675 971 décrit une telle bouteille rapportée dans un circuit de refroidissement.

Les bouteilles intégrées sont directement fixées au composant et subissent le même processus de brasage, comme cela est rapporté dans le document FR2 849 176 A1.

Compte tenu de la difficulté de braser le composant due au dégazage du dessiccateur, on prévoit sur certaines bouteilles intégrées une ouverture à travers laquelle le filtre et le dessiccateur peuvent être introduits dans les bouteilles en finition, l'ouverture étant fermée par un bouchon amovible. Il est ainsi possible de changer à volonté le filtre et le dessiccateur sans changer l'ensemble du composant.

Afin de réduire les coûts de fabrication et les risques de fuites inhérents au système d'étanchéité par joints toriques des bouchons amovibles, il y a avantage à utiliser des systèmes de bouteilles intégrées scellées.

On connaît de tels systèmes de bouteilles intégrées scellées dans lesquels l'ouverture prévue pour l'introduction du filtre et du dessiccateur est fermée par une capsule scellée par soudure au tungstène sous gaz inerte (soudure dite TIG) ou par soudure laser.

Toutefois, cette solution n'est pas très intéressante en termes de coût, car la soudure TIG ou laser en finition est relativement lourde.

C'est pourquoi on lui préfère les bouteilles intégrées scellées brasées en une seule opération avec le composant, le filtre et le dessiccateur. Cette solution est très économique car il n'y a pas d'autres opérations supplémentaires à implémenter sur le composant en sortie du four de brasage.

Il subsiste cependant une difficulté avec ce type de solution qui réside dans le comportement du dessiccateur au cours du processus de brasage. En effet, à haute température, celui-ci a tendance à diffuser, vers le composant avec lequel il communique, de l'humidité qui pollue l'atmosphère neutre du four et perturbe l'opération de brasage. Il en résulte des fuites dans les composants qui interdisent l'industrialisation de cette solution.

Aussi, un but de l'invention est de proposer un procédé de brasage du type brasage en une seule opération, qui permettrait d'éviter que les molécules d'eau dégazées par le dessiccateur ne se propagent jusqu'aux zones du composant qui doivent être brasées, conduisant alors à un brasage de mauvaise qualité.

Ce but est atteint, conformément à l'invention, grâce à un procédé de brasage d'un composant de circuit de climatisation tel que défini dans la revendication 1.

Ainsi, on comprend que, lors du processus de brasage, le dessiccateur reste confiné à l'intérieur de la bouteille, empêchant de cette manière toute pollution de l'atmosphère de brasage par l'humidité susceptible de s'échapper du fait du dégazage du dessiccateur. Par contre, à l'issue de l'opération de brasage, le confinement du dessiccateur est levé afin de permettre l'action dessiccative de ce dernier lors du fonctionnement normal du composant.

Selon un premier mode de réalisation, lesdits moyens de confinement sont des moyens d'obturation, notamment fusibles, d'au moins une ouverture de communication de la bouteille avec le composant.

Par « au moins une ouverture de communication », il faut entendre, soit l'ouverture unique permettant le passage du fluide réfrigérant du composant à la bouteille, la sortie de la bouteille étant reliée à l'entrée du composant situé en aval dans le circuit de climatisation, soit les ouvertures permettant le passage du fluide réfrigérant du composant à la bouteille et le retour du fluide de la bouteille au composant dans le cadre par exemple d'un condenseur avec passage de sous-refroidissement.

Les moyens d'obturation peuvent être réalisés sous la forme de fins opercules de sorte que, comme le prévoit l'invention, lesdits moyens de confinement sont aptes à être libérés sous l'action d'une variation de pression extérieure. Dans ce contexte, il suffit alors, à la fin de l'opération de brasage, d'appliquer à l'intérieur du composant une surpression ou une dépression suffisante pour faire éclater les opercules et établir la communication entre le composant et la bouteille à travers la ou les ouvertures initialement obturées.

Avantageusement, ladite variation de pression extérieure est une surpression exercée lors d'un test d'étanchéité de l'ensemble bouteille-composant. On sait en effet qu'après brasage les composants de climatisation sont testés de manière à garantir leur étanchéité lors de la livraison au client. Ce test est effectué habituellement avec de l'hélium à une pression de 25 bars environ. Cette surpression est suffisante pour percer les opercules de faible épaisseur qui obturent les ouvertures de communication entre le composant et la bouteille.

Dans ce premier mode de réalisation, on peut éviter une éventuelle pollution à l'intérieur de la bouteille due au dégazage du dessiccateur lors de l'opération de brasage, si le procédé conforme à l'invention comporte une première étape supplémentaire consistant à réaliser, avant brasage de l'ensemble bouteille-composant, un orifice de communication du dessiccateur avec l'extérieur de la bouteille, et une deuxième étape supplémentaire consistant à boucher ledit orifice après brasage.

Selon un deuxième mode de réalisation, lesdits moyens de confinement comprennent une enveloppe contenant le dessiccateur. Ce dernier est donc confiné à l'intérieur de l'enveloppe formant sachet pour le dessiccateur, ce qui empêche toute pollution à l'humidité aussi bien à l'intérieur du composant qu'à l'intérieur de la bouteille.

Si, comme le prévoit l'invention, l'enveloppe contient également des moyens de perçage de ladite enveloppe, on comprend qu'à la fin du brasage, l'enveloppe est comprimée contre les moyens de perçage sous l'action par exemple de la pression de test d'étanchéité, ce qui a pour effet de déchirer au moins partiellement l'enveloppe et dégager ainsi des zones de contact du dessiccateur avec le fluide réfrigérant.

L'invention concerne également une bouteille réservoir de fluide réfrigérant telle que définie dans la revendication 6.

La description qui va suivre en regard des dessins annexés, donnés à titre d'exemples non limitatifs, fera bien comprendre en quoi consiste l'invention et comment elle peut être réalisée.
La figure 1a est une vue de coupe, selon un plan de coupe longitudinale, d'un premier mode de réalisation d'une bouteille réservoir d'un composant de climatisation comportant des opercules de confinement.
La figure 1b est une vue de coupe de la bouteille de la figure 1a dont les opercules de confinement ont été ouverts.
La figure 2 est une vue d'une variante de réalisation de la bouteille des figures 1a et 1 b.
La figure 3 est une vue de coupe, selon un plan de coupe longitudinale, d'un mode de réalisation, non couvert par la présente invention, bouteille réservoir d'un composant de climatisation comprenant une enveloppe de confinement d'un dessiccateur.
La figure 4 est une vue de côté d'une grille de maintien du dessiccateur de la figure 3.
La figure 5 est une vue de coupe, selon un plan de coupe longitudinale, du dessiccateur de la figure 3 après brasage.
La figure 6 est une vue de coupe, selon un plan de coupe radiale, d'un moyen de perçage de l'enveloppe de confinement montrée sur la figure 3.
La figure 7a est une vue coupe, selon un plan de coupe radiale, d'un tube de maintien du dessiccateur de la figure 3.
La figure 7b est une vue en perspective du tube de maintien de la figure 7a.

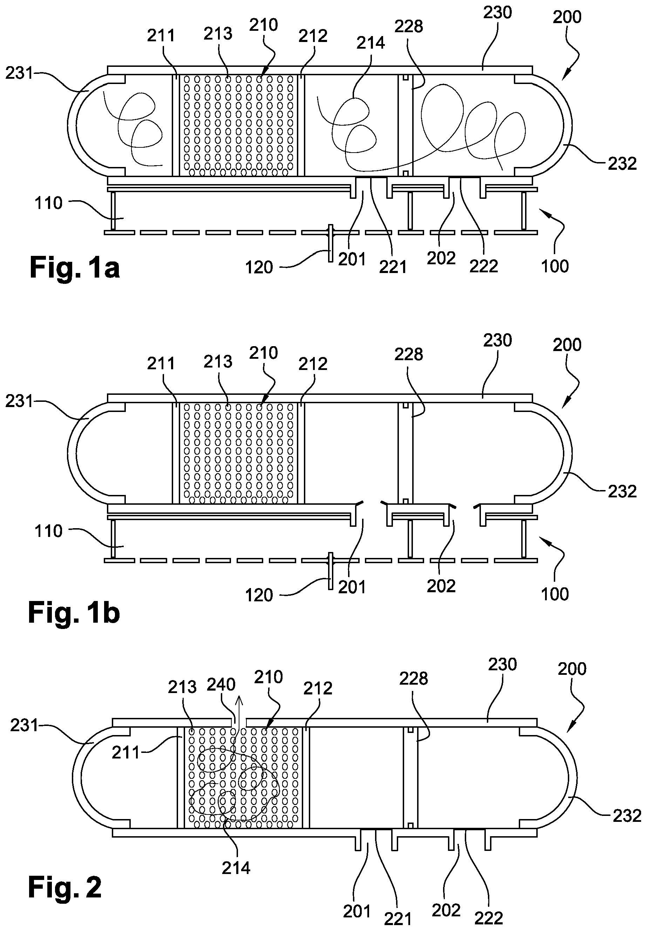

Sur les figures 1a, 1b et 2, est représenté un composant 100 d'un circuit de climatisation, un condenseur par exemple, équipé d'une bouteille réservoir 200 d'un fluide réfrigérant. Seuls les éléments du condenseur 100 situés à proximité de la bouteille 200 sont montrés sur ces figures, à savoir la boîte collectrice 110 et l'extrémité du faisceau de tubes, tel que le tube 120, communiquant avec la boîte collectrice 110.

La bouteille 200 est constituée d'un corps cylindrique 230 qui pourra être percé de deux ouvertures 201, 202 de communication avec le condenseur 100 et fermé à ses extrémités par des capsules 231, 232.

D'une manière générale, la bouteille 200 est destinée à contenir du fluide réfrigérant en phase liquide, lequel constitue une réserve de fluide capable de compenser des fuites pouvant survenir dans le circuit de climatisation. La bouteille 200 permet en outre d'assurer que le fluide réfrigérant en sortie du condenseur 100 soit à l'état liquide avant de parvenir au détendeur du circuit. Dans l'exemple des figures 1a, 1b et 2, la bouteille 200 est en configuration de sous-refroidissement, au sens où, en fonctionnement de l'ensemble bouteille-condenseur, le fluide réfrigérant, après avoir pénétré dans la bouteille 200 par l'ouverture 201 d'entrée, retourne au condenseur 100 par l'ouverture 202 de sortie.

Comme cela a été expliqué plus haut, la bouteille 200 contient également un dessiccateur 210 et un filtre 228, ceci de manière à éliminer respectivement l'humidité et les corps étrangers présents dans le fluide réfrigérant et susceptibles de produire des fuites et des pertes de fonctionnalités ou la casse de certains composants du circuit de climatisation.

Le dessiccateur 210 représenté sur les figures 1a, 1b et 2 est constitué de billes 213 de silice contenues entre deux grilles métalliques 211, 212 en un matériau, comme de l'acier inoxydable par exemple, dont le point de fusion est supérieure à la température de brasage de 600 °C environ. Les grilles métalliques 211, 212 peuvent être serties ou brasées sur la paroi du corps cylindrique 230 de la bouteille 200.

La bouteille 200 est ici du type intégré, c'est-à-dire qu'elle est d'abord mécaniquement assemblée au condenseur 100 avant brasage, puis brasée en même temps que le condenseur.

Sans précaution particulière, il existe un risque qu'au cours du processus de brasage, le dégazage du dessiccateur 210 libère des molécules d'eau, lesquelles peuvent alors cheminer dans la bouteille 200 et atteindre, à travers les ouvertures 201, 202, la boîte collectrice 110 jusqu'au passage des tubes 120. L'atmosphère dans le composant et dans le four se trouve alors polluée, d'où il résulte un brasage de mauvaise qualité et un défaut d'étanchéité du faisceau de tubes, de la ou des boîte collectrices et/ou de la bouteille.

Pour éviter cet inconvénient, l'invention propose d'isoler le dessiccateur 210 du condenseur 100 grâce à des moyens de confinement qui, dans le mode de réalisation des figures 1a, 1b et 2, sont des opercules 221, 222 obturant les ouvertures 201, 202 d'entrée et de sortie.

Ces opercules sont réalisés avant brasage, par exemple au moment de l'usinage des ouvertures en épargnant une épaisseur de métal, généralement de l'aluminium. Au cours du brasage, et comme le montre la figure 1a, la présence des opercules 221, 222 empêchent la migration des produits 214 de dégazage du dessiccateur 210 vers la boîte collectrice 110 et les passages de tubes 120, garantissant une qualité de brasage optimale. Bien entendu, à l'issue du brasage, les opercules doivent être éliminés, ce qui peut être fait par perçage lors du test d'étanchéité du condenseur, lequel est effectué au moyen d'hélium sous une pression d'environ 25 bars avant livraison au client. Il faut alors prévoir de donner aux opercules 221, 222 une épaisseur relativement faible, de l'ordre de quelques dixièmes de millimètre par exemple.

La figure 1b montre l'ensemble bouteille-condenseur après ouverture des opercules 221, 222.

Il faut préciser ici que la libération des moyens de confinement, les opercules dans le mode de réalisation décrit, peut être obtenue plus généralement au moyen de toute variation de pression extérieure, que ce soit une surpression ou une dépression.

De même, l'usinage d'une mince épaisseur d'aluminium pouvant s'avérer délicat, les opercules 221, 222 peuvent être réalisés plus avantageusement en recouvrant les ouvertures 201, 202 de communication d'une fine pellicule d'aluminium de quelques dixièmes de millimètre d'épaisseur.

On peut également obturer les ouvertures 201, 202 au moyen d'un matériau apte à se dégrader en cours de brasage, aspect non couvert par la présente invention. Dans ce cas, la pollution due au dégazage du dessiccateur 210 reste confinée dans la bouteille pendant le brasage et disparaît en fin de brasage. Cette solution a l'avantage d'éliminer les risques de libérer des corps étrangers dans le circuit de climatisation, comme ce peut être le cas avec des opercules en aluminium.

De manière à garantir un brasage optimal des capsules 231, 232 de fermeture sur le corps 230 de bouteille, et conformément à la figure 2, un orifice 240 de communication du dessiccateur 210 avec l'extérieur de la bouteille 200 pourra être ménagé à travers le corps 230 de la bouteille avant brasage, afin de permettre, lors du brasage, l'évacuation hors de la bouteille 200 des produits 214 de dégazage du dessiccateur 210. A l'issue du brasage, l'orifice 240 est bouché, par exemple, par un point de soudure TIG.

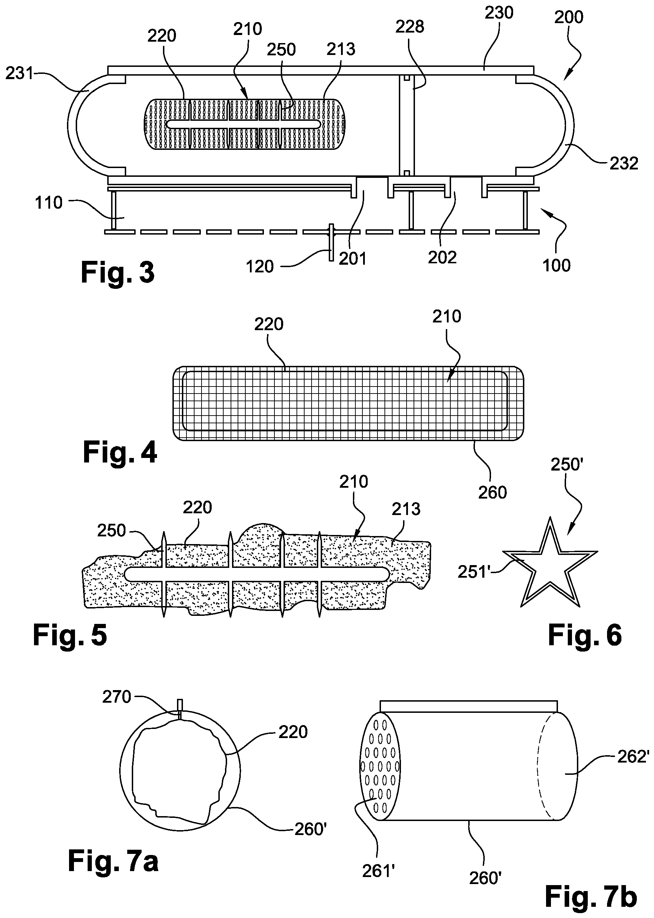

La figure 3 montre une variante de réalisation, non couverte par la présente invention, dans laquelle lesdits moyens de confinement sont constitués par une enveloppe 220 contenant le dessiccateur 210.

L'épaisseur du matériau de l'enveloppe 220 est telle que celle-ci doit être suffisamment souple pour pouvoir se comprimer lors du test d'étanchéité sous hélium à 25 bars. A titre d'exemple, l'enveloppe peut être réalisée avec une feuille d'aluminium d'épaisseur inférieure à 200 µm, fermée par soudage.

Le sachet formé par l'enveloppe 220 contient également des moyens 250 de perçage aptes à percer l'enveloppe comprimée sous la pression de 25 bars au cours du test d'étanchéité et ainsi libérer l'action du dessiccateur 210. Dans l'exemple de la figure 3, les moyens 250 de perçage sont des pointes en acier inoxydable, en aluminium ou un autre matériau dont le point de fusion est supérieur à la température de brasage, autour de 600 °C. La figure 5 montre le sachet 220 de dessiccateur 210 comprimé et percé, après que le test d'étanchéité ait été effectué.

Compte tenu des températures élevées atteintes lors du processus de brasage, le volume du sachet 220 est multiplié par un facteur qui dépend de la pression à laquelle il aura été initialement rempli. Pour un remplissage à la pression atmosphérique, ce facteur est de 3 environ, contre 1,5 pour une pression de remplissage de 0,5 bar.

Aussi, afin d'éviter que l'enveloppe 220 ne se déchire par augmentation de volume lors des phases de température élevée, on pourra prévoir d'enfermer le sachet à l'intérieur d'une structure rigide de maintien qui, dans le mode de réalisation représenté sur la figure 4, a la forme d'une grille 260 en acier inoxydable ou en aluminium par exemple.

La figure 6 montre une variante des moyens de perçage de l'enveloppe 220. Il s'agit d'une pièce 250' obtenue par emboutissage 2D dont le profil présente cinq bords 251' en forme de lame de couteau permettant de découper l'enveloppe de manière conséquente et offrir au dessiccateur 210 un contact suffisant avec le fluide réfrigérant lors du fonctionnement du condenseur.

Les figures 7a et 7b montrent un autre exemple de, non couvert par la présente invention, réalisation d'une structure rigide de maintien du sachet 220 pendant le brasage, constituée d'un corps tubulaire 260' fermé par des grilles 261', 262' à chacune de ses extrémités. A l'intérieur de la structure, le sachet 220 est relié au corps tubulaire 260' par une liaison mécanique 270 qui provoque le déchirement de l'enveloppe 220 lors du test d'étanchéité.

## Revendications

1. Procédé de brasage d'un composant (100) de circuit de climatisation comportant une bouteille réservoir (200) de fluide réfrigérant, ladite bouteille contenant un dessiccateur (210) dudit fluide réfrigérant, ledit composant (100) étant du type d'un condenseur, **caractérisé en ce que** ledit procédé comprend les étapes consistant à :
- équiper ladite bouteille (200) de moyens (221, 222 ; 220) de confinement aptes à isoler ledit dessiccateur (210) dudit composant (100) pendant une opération de brasage simultanée de ladite bouteille et dudit composant,
- assembler et braser ensemble ladite bouteille (200) et ledit composant (100),
- libérer lesdits moyens (221, 222 ; 220) de confinement afin d'établir une communication entre le composant et la bouteille.

2. Procédé selon la revendication 1, dans lequel lesdits moyens (221, 222 ; 220) de confinement sont aptes à être libérés sous l'action d'une variation de pression extérieure.

3. Procédé selon la revendication 2, dans lequel ladite variation de pression extérieure est une surpression exercée lors d'un test d'étanchéité de l'ensemble bouteille (200)-composant (100).

4. Procédé selon l'une quelconque des revendications 1 à 3, dans lequel lesdits moyens de confinement sont des moyens (221, 222) d'obturation d'au moins une ouverture (201, 202) de communication de la bouteille (200) avec le composant (100).

5. Procédé selon la revendication 4, comportant une première étape supplémentaire consistant à réaliser, avant brasage de l'ensemble bouteille (200)-composant (100), un orifice (240) de communication du dessiccateur (210) avec l'extérieur de la bouteille (200), et une deuxième étape supplémentaire consistant à boucher ledit orifice (240) après brasage.

6. Bouteille réservoir (200) de fluide réfrigérant, destiné à équiper un composant (100), du type d'un condenseur de circuit de climatisation, ladite bouteille contenant un dessiccateur (210) dudit fluide réfrigérant, **caractérisé en ce que** ladite bouteille comprend en outre des moyens (221, 222 ; 220) de confinement aptes à isoler ledit dessiccateur (210) dudit composant (100) pendant une opération de brasage simultané de ladite bouteille et dudit composant, lesdits moyens de confinement étant des moyens (221, 222) d'obturation d'au moins une ouverture (201, 202) de communication de la bouteille (200) avec le composant (100), lesdits moyens (221, 222 ; 220) de confinement étant aptes à être libérés sous l'action d'une variation de pression extérieure.

7. Bouteille selon la revendication 6, dans laquelle ledit moyen d'obturation est fusible.

8. Bouteille selon la revendication 7, dans laquelle ledit moyen d'obturation est un opercule (221, 22).

9. Bouteille selon la revendication 8, dans laquelle l'opercule est réalisé en aluminium au moment de l'usinage d'une ouverture (201, 202) de communication en épargnant une épaisseur de métal.

10. Bouteille selon la revendication 8, dans laquelle l'opercule est réalisé en recouvrant l'ouverture (201, 202) de communication d'une pellicule d'aluminium de quelques dixièmes de millimètre d'épaisseur.

11. Bouteille selon la revendication 8, dans laquelle l'opercule est réalisé au moyen d'un matériau apte à se dégrader en cours de brasage.

## Patentansprüche

1. Verfahren zum Löten eines Bauteils (100) eines Klimatisierungskreislaufs, der eine Kühlfluid-Speicherflasche (200) aufweist, wobei die Flasche einen Entfeuchter (210) des Kühlfluids enthält, wobei das Bauteil (100) von der Art eines Kondensators ist, **dadurch gekennzeichnet, dass** das Verfahren die Schritte enthält, die darin bestehen:
- Ausstatten der Flasche (200) mit Einschließeinrichtungen (221, 222; 220), die den Entfeuchter (210) während eines gleichzeitigen Lötvorgangs der Flasche und des Bauteils vom Bauteil (100) isolieren können,
- Zusammenbauen und Zusammenlöten der Flasche (200) und des Bauteils (100),
- Freigeben der Einschließeinrichtungen (221, 222; 220), um eine Verbindung zwischen dem Bauteil und der Flasche herzustellen.

2. Verfahren nach Anspruch 1, wobei die Einschließeinrichtungen (221, 222; 220) unter der Wirkung einer Änderung eines äußeren Drucks freigegeben werden können.

3. Verfahren nach Anspruch 2, wobei die Änderung des äußeren Drucks ein Überdruck ist, der bei einem Dichtheitstest der Einheit aus Flasche (200) und Bauteil (100) ausgeübt wird.

4. Verfahren nach einem der Ansprüche 1 bis 3, wobei die Einschließeinrichtungen Verschlusseinrichtungen (221, 222) mindestens einer Öffnung (201, 202) zur Verbindung der Flasche (200) mit dem Bauteil (100) sind.

5. Verfahren nach Anspruch 4, das einen ersten zusätzlichen Schritt, der darin besteht, vor dem Löten der Einheit aus Flasche (200) und Bauteil (100) eine Öffnung (240) zur Verbindung des Entfeuchters (210) mit der Außenumgebung der Flasche (200) herzustellen, und einen zweiten zusätzlichen Schritt aufweist, der darin besteht, die Öffnung (240) nach dem Löten zu verschließen.

6. Speicherflasche (200) eines Kühlfluids, das dazu bestimmt ist, ein Bauteil (100) von der Art eines Kondensators eines Klimatisierungskreislaufs zu bestücken, wobei die Flasche einen Entfeuchter (210) des Kühlfluids enthält, **dadurch gekennzeichnet, dass** die Flasche außerdem Einschließeinrichtungen (221, 222; 220) enthält, die den Entfeuchter (210) während eines gleichzeitigen Lötvorgangs der Flasche und des Bauteils vom Bauteil (100) isolieren können, wobei die Einschließeinrichtungen Einrichtungen (221, 222) zum Verschluss mindestens einer Öffnung (201, 202) zur Verbindung der Flasche (200) mit dem Bauteil (100) sind, wobei die Einschließeinrichtungen (221, 222; 220) unter der Wirkung einer Änderung eines äußeren Drucks freigegeben werden können.

7. Flasche nach Anspruch 6, wobei die Verschlusseinrichtung schmelzbar ist.

8. Flasche nach Anspruch 7, wobei die Verschlusseinrichtung eine Abdeckung (221, 22) ist.

9. Flasche nach Anspruch 8, wobei die Abdeckung zum Zeitpunkt der maschinellen Herstellung einer Verbindungsöffnung (201, 202) aus Aluminium hergestellt wird, indem eine Metalldicke ausgespart wird.

10. Flasche nach Anspruch 8, wobei die Abdeckung hergestellt wird, indem die Verbindungsöffnung (201, 202) mit einem Aluminiumfilm einer Dicke von einigen Zehntel Millimeter bedeckt wird.

11. Flasche nach Anspruch 8, wobei die Abdeckung mittels eines Materials hergestellt wird, das sich während des Lötens abbauen kann.

## Claims

1. Brazing method for a component (100) of an air-conditioning circuit comprising a fluid refrigerant receiver (200), said receiver containing a desiccator (210) for said refrigerant fluid, said component (100) being of the condenser type **characterized in that** said method comprises the stages consisting of:
- equipping said receiver (200) with means (221, 222; 220) of containment capable of isolating said desiccator (210) from said component (100) during a simultaneous operation for brazing said receiver and said component, said means of containment being means (221, 222) for the closure of at least one communication opening (201, 202) for the receiver (200) with the component (100), said means (221, 222; 220) of containment being capable of being released under the action of a variation in the external pressure,
- assembling and brazing together said receiver (200) and said component (100),
- releasing said means (221, 222; 220) of containment so as to establish communication between the component and the receiver.

2. Method according to Claim 1, in which said means (221, 222; 220) of containment are capable of being released under the action of a variation in the external pressure.

3. Method according to Claim 2, in which said variation in the external pressure is a positive pressure applied in the course of a tightness test performed on the receiver (200) / component (100) assembly.

4. Method according to one of Claims 1 to 3, in which said means of containment are means (221, 222) for the closure of at least one communication opening (201, 202) for the receiver (200) with the component (100).

5. Method according to Claim 4, comprising a first supplementary stage involving the realization, prior to brazing the receiver (200) / component (100) assembly, of an orifice (240) for the communication of the desiccator (210) with the exterior of the receiver (200), and a second supplementary stage involving closing off said orifice (240) after brazing.

6. Fluid refrigerant receiver (200) intended to equip a component (100), of the condenser of an air-conditioning circuit type, said receiver containing a desiccator (210) for said refrigerant fluid, **characterized in that** said receiver additionally comprises means (221, 222; 220) of containment capable of isolating said desiccator (210) from said component (100) during a simultaneous operation for brazing said receiver and said component.

7. Receiver according to Claim 6, in which said means of closure is fusible.

8. Receiver according to Claim 7, in which said means of closure is a cover (221, 22).

9. Receiver according to Claim 8, in which the cover is realized from aluminium at the time of machining a communication opening (201, 202) by retaining a thickness of metal.

10. Receiver according to Claim 8, in which the cover is realized by covering the communication opening (201, 202) with an aluminium foil having a thickness of a few tenths of a millimetre.

11. Receiver according to Claim 8, in which the cover is realized by means of a material that is capable of degrading in the course of brazing.
